# EUROPEAN PATENT SPECIFICATION

(11) **EP 1 452 274 B1**
(45) Date of publication and mention of the grant of the patent: **10.05.2006**
(21) Application number: 03255618.5
(22) Date of filing: 09.09.2003
(51) Int. Cl.: B25B 1/10, F16H 25/18

(54) **A unit for increasing clamping force for a vice**
Einheit zur Spannkraftverstärkung für einen Schraubstock
Unité pour augmenter la force de serrage pour un étau

(30) Priority: 26.02.2003 KR 2003012034
(43) Date of publication of application: 01.09.2004
(73) Proprietor: Samchully Machinery Co., Ltd., Bucheon-si, Kyunggi-do 420-807 (KR)
(72) Inventor: Seo, Hong Suk, Kanseo-gu Seoul 157-010 (KR)
(74) Representative: Hale, Peter

(56) References cited:
- EP-A- 0 348 168
- EP-A- 0 418 197
- DE-U- 20 211 243
- US-A- 4 044 623
- US-A- 4 856 359
- US-A- 4 899 999
- US-A- 5 018 399

## Description

The present invention relates to a unit for increasing clamping force for a vice which holds an object on a machine tool in position and to a unit for adjusting clamping force directed from a movable jaw of the vice to a fixed jaw thereof.

Conventionally, vices having units for increasing clamping force, especially vices having units for increasing clamping force by means of liquid pressure have been disclosed in JP-A-46-15400 and JP-B-63-41711. Each of the conventional vices comprises: a base frame fixed on a table of a machine tool; a fixed jaw provided on the base frame; a movable jaw provided to be slidable on the base frame; a screw axis in the form of a pipe provided in the base frame to be rotatable and slidable therein and connected to the movable jaw in a screwed type; a central axis fitted in the screw axis to be rotatable and slidable therein and connected to the screw axis through a clutch and a hydraulic unit for increasing clamping force; and a handle connected to one end of the central axis. If the resistance against the clamping force over the screw axis is within a certain range, the clutch connects the central axis and the screw axis and rotates them integrally. If the resistance is out of the certain range, however, the clutch releases the connection between the central axis and the screw axis and simultaneously drives the hydraulic unit for increasing clamping force by the sliding action of the central axis, thereby applying the clamping force directed from the movable jaw to the fixed jaw to the screw axis.

However, in the above conventional vice having the hydraulic unit for increasing clamping force, if a large external force was applied to the object fitted between the movable jaw and the fixed jaw, it happened that the hydraulic unit for increasing clamping force was instantaneously released and thus the object was deviated from the clamped position and taken out of the position on the vice. Especially in case of precision machining of objects, such deviation of objects could cause the deterioration of the quality of precision products and decrease the machining precision.

In addition, another conventional vice having a mechanical unit for increasing clamping force was disclosed in JP-B-63-53413. In this patent application, the vice can prevent the mechanical unit for increasing clamping force from being instantaneously released when a large external force is given on the objects. However, as each of driving rollers moves by means of the sliding contact, the frictional loss is large, and thus the efficiency of the clamping force with respect to the applied force decrease.

DE 202 11 243 U, disclosing the preamble of claims 1 and 3, discloses a force amplifying vice, and EP-A-0 348 168 discloses a mechanism for actuating workpiece engagement means.

The object of the present invention is to solve the above disadvantages of the conventional units for increasing clamping force and to provide a new unit for increasing clamping force for a vice, which does not cause an object to be easily deviated or detached from the vice even if a large external force is applied to the object.

Another object of the present invention is to provide a unit for increasing clamping force for a vice, which has a high efficiency of the clamping force with respect to the applied force.

The present invention is set out in the independent claims. Some preferred features are set out in the claims dependent thereto.

According to a first embodiment, the present invention comprises:
a first moving member (10) having an inward wedge-shaped end;
a holding member (20) having a hole (21) through which the first moving member (10) moves back and forth and including first and second guide grooves (23A and 23B) provided in parallel on one end surface and symmetrically centering around a diameter of a sectional surface of the holding member (20), and first and second inwardly inclined planes (24A and 24B) provided between the first and second guide grooves (23A and 23B) toward the hole (21) along the diameter;
a second moving member (30) having third and fourth guide grooves (33A and 33B) provided in parallel on one end surface to be in opposite to the first and second guide grooves (23A and 23B);
a unit for increasing force (40) provided between the holding member (20) and the second moving member (30) to be slidable and rollable along the first to fourth guide grooves (23A, 23B, 33A and 33B); and
a pair of connecting means (50) to connect the holding member (20) with the second moving member (30) so that the second moving member (30) can approach the holding member (20) or withdraw therefrom.

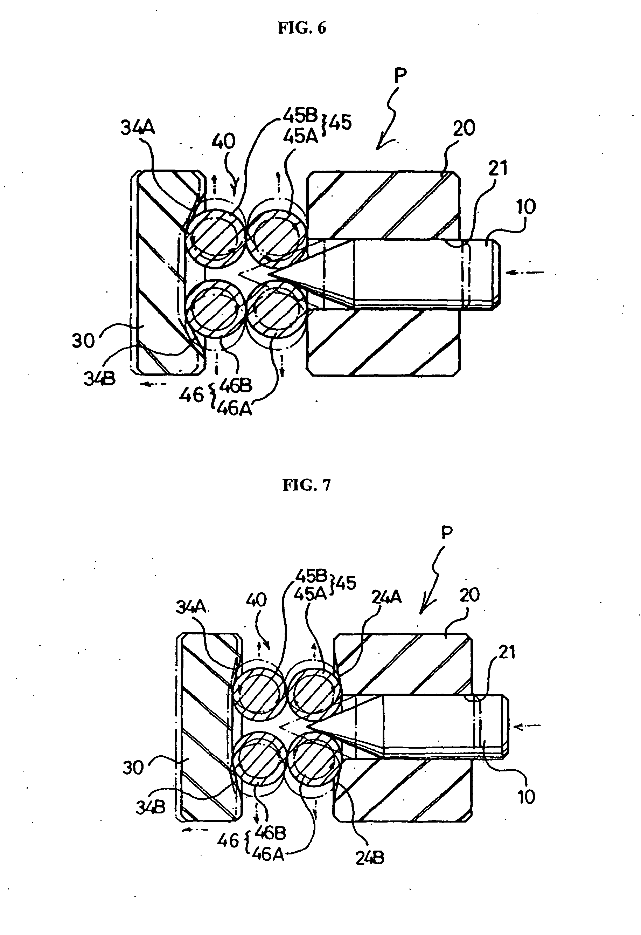

Further, according to a second embodiment of the present invention as shown in Fig. 6, the unit for increasing clamping force for a vice comprises:
a first moving member (10) having an inward wedge-shaped end;
a holding member (20) having a hole (21) through which the first moving member (10) moves back and forth and including first and second guide grooves (23A and 23B) provided in parallel on one end surface and symmetrically centering around a diameter of a sectional surface of the holding member (20);
a second moving member (30) having third and fourth guide grooves (33A and 33B) provided in parallel on one end surface to be in opposite to the first and second guide grooves (23A and 23B)) and having third and fourth inwardly inclined planes (34A and 34B) provided between the third and fourth guide grooves (33A and 33B);
a unit for increasing force (40) provided between the holding member (20) and the second moving member (30) to be slidable and rollable along the first to fourth guide grooves (23A, 23B, 33A and 33B); and
a pair of connecting means (50) to connect the holding member (20) with the second moving member (30) so that the second moving member (30) can approach the holding member (20) or withdraw therefrom.

According to a third embodiment of the present invention as shown in Fig. 7, the unit for increasing clamping force for a vice comprises:
a first moving member (10) having an inward wedge-shaped end;
a holding member (20) having a hole (21) through which the first moving member (10) moves back and forth and including first and second guide grooves (23A and 23B) provided in parallel on one end surface and symmetrically centering around a diameter of a sectional surface of the holding member (20), and first and second inwardly inclined planes (24A and 24B) provided between the first and second guide grooves (23A and 23B) toward the hole (21) along the diameter;
a second moving member (30) having third and fourth guide grooves (33A and 33B) provided in parallel on one end surface to be in opposite to the first and second guide grooves (23A and 23B)) and having third and fourth inwardly inclined planes (34A and 34B) provided between the third and fourth guide grooves (33A and 33B);
a unit for increasing force (40) provided between the holding member (20) and the second moving member (30) to be slidable and rollable along the first to fourth guide grooves (23A, 23B, 33A and 33B); and
a pair of connecting means (50) to connect the holding member (20) with the second moving member (30) so that the second moving member (30) can approach the holding member (20) or withdraw therefrom.

In the units for increasing clamping force for a vice as described above, the unit for increasing force (40) comprises:
a first slide body (41) comprising first and second guide plates (41A and 41B) substantially in the shape of square, each of which has two U-shaped open bores (a, a) on its upper end and two circular bores (b, b) on its lower part, and which are overlapped in opposite directions and slide in opposite directions to each other in the first guide groove (23A) of the holding member (20) and the third guide groove (33A) of the second moving member (30);
a second slide body (42) comprising third and fourth guide plates (42A and 42B) substantially in the shape of square, each of which has two U-shaped open bores (a, a) on its upper end and two circular bores (b, b) on its lower part, and which are overlapped in opposite directions and slide in opposite directions to each other in the second guide groove (23B) of the holding member (20) and the fourth guide groove (33B) of the second moving member (30);
a first group of rollers (45) comprising a front upper roller (45A) and a rear upper roller (45B), each of which is provided between the first and second slide bodies (41 and 42) through their respective bores (a and b) to be rotatable and slidable and has a rotary axis (45a or 45b) on both ends thereof; and
a second group of rollers (46) comprising a front lower roller (46A) and a rear lower roller (46B), each of which is provided between the first and second slide bodies (41 and 42) through their respective bores (a and b) to be rotatable and slidable and has a rotary axis (46a or 46b) on both ends thereof.

In this connection, it is preferable that all the rollers (45A, 45B, 46A and 46B) have the same diameter.

In any of the above first to third embodiments of the units for increasing clamping force for a vice, the connecting means (50) comprises:
a through hole (51) provided on either side of the hole (21) of the holding member (20) and having a jaw (51a) along its internal periphery; a bolt (52) inserted into the through hole (51); spring members (53) provided between the jaw (51a) of the through hole (51) and a head (52a) of the bolt (52); and a recess (54) provided in one end surface of the second moving member (30) and threaded along its internal periphery to be engaged with an end of the bolt (52).

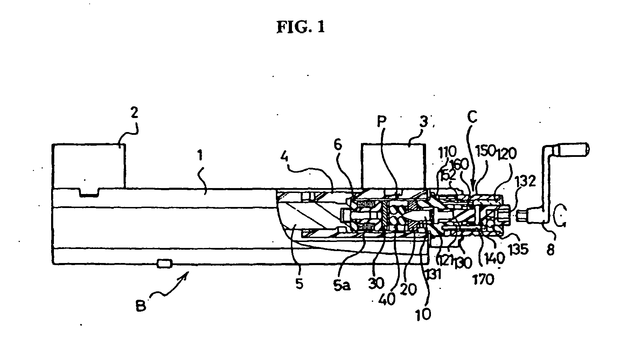

Referring to Fig. 1, the vice (B) according to the present invention comprises a base frame (1); a fixed jaw (2) mounted on the base frame (1); a slider (4) slidably affixed on the base frame (1); a movable jaw (3) mounted on the slider (4); the screw axis (5) mounted on the base frame (1) to be rotatable and slidable and connected to the slider (4) in a screwed type to move the movable jaw (3); a disk spring member (6) and the unit for increasing clamping force (P) fitted in the elongated end (5a) of the screw axis (5); the unit for adjusting clamping force (C); and a handle (8) connected to one end of the unit for adjusting clamping force (C).

Referring to Figs. 2 to 7, three embodiments of the unit for increasing clamping force (P) will be described in detail.
Fig. 1 shows a vice including a unit for increasing clamping force and a unit for adjusting clamping force;
Fig. 2 is a perspective view of the unit for increasing clamping force according to a first embodiment of the present invention;
Fig. 3 is a sectional view taken along the line A-A of Fig. 2;
Fig. 4 is a disassembled perspective view showing procedures of assembling the unit for increasing clamping force;
Figs. 5 (a) and (b) are sectional views showing the states of operation of the unit for increasing clamping force;
Fig. 6 is a schematic sectional view of the unit for increasing clamping force according to a second embodiment of the present invention;
Fig. 7 is a schematic sectional view of the unit for increasing clamping force according to a third embodiment of the present invention;
Figs. 8 (a) to (c) are sectional views of a unit for adjusting clamping force, wherein (a) shows the pre-operational state of the unit where a first clutch and a second clutch are engaged with each other, (b) shows the operational state of the unit where the first clutch and the second clutch are being disengaged by an adjusting knob, and (c) shows the post-operational state where the first clutch and the second clutch are disengaged;
Figs. 9 (a) and (b) are exploded perspective views of the adjusting knob in the unit for adjusting clamping force, wherein (a) shows the state where a fitting groove of the adjusting knob is engaged with a fitting protrusion of an interval maintaining part, and (b) shows the state where the fitting groove and the fitting protrusion are disengaged;
Fig. 10 is a right side view of the unit for adjusting clamping force; and
Figs. 11 (a) to (c) are exploded sectional views of the unit for adjusting clamping force, wherein (a) shows the pre-operational state of the unit where the first clutch and the second clutch are engaged with each other, (b) shows the post-operational state where the first and the second clutches are disengaged by the adjusting knob, and (c) shows the state where the unit for increasing clamping force is pressurised by the rotation and forward movement of a central axis until the first clutch is engaged with the second clutch.

### First Embodiment

The unit for increasing clamping force (P) comprises the first moving member (10), the holding member (20), the second moving member (30), the unit for increasing force (40) and the connecting means (50).

The first moving member (10) is formed to have an inward leading end in the shape of a wedge, i.e., the shape of a circular cone in this embodiment.

The holding member (20) is formed in the shape of a cylinder and provided with the hole (21) in the centre thereof, through which the first moving member (10) moves back and forth. The first and the second guide grooves (23A and 23B) are provided symmetrically centering around a diameter of a sectional surface of the holding member (20) and are formed in parallel on one end surface of the holding member (20). Between the first and second guide grooves (23A and 23B), the first and the second inwardly inclined planes (24A and 24B) are provided along the diameter toward the hole (21).

The second moving member (30) is substantially in the form of a cylinder, and has the third and the fourth guide grooves (33A and 33B) formed in parallel on one end surface thereof to be in opposite to the first and second guide grooves (23A and 23B). The third and the fourth guide grooves (33A and 33B) are also provided symmetrically centering around a diameter of a sectional surface of the second moving member (30).

The unit for increasing force (40) is provided between the holding member (20) and the second moving member (30) to be slidable and rollable along the first to fourth guide grooves (23A, 23B, 33A and 33B), and comprises the first and the second slide bodies (41 and 42) and the first and the second groups of rollers (45 and 46).

The first slide body (41) comprises the first and the second guide plates (41A and 41B), each of which has two U-shaped open bores (a, a) on its upper end and two circular bores (b, b) on its lower part, and which are overlapped in opposite directions to each other so that the two open bores (a, a) of the first guide plate (41A) can be communicated with the two circular bores (b, b) of the second guide plate (41B), and the two circular bores (b, b) of the first guide plate (41A) can be communicated with the two open bores (a, a) of the second guide plate (41B). The U-shaped open bore (a) and the circular bore (b) of each of the first and the second guide plates (41A and 41B) in communication with each other are referred to as "the first communicated bores".

The second slide body (42) comprises the third and the fourth guide plates (42A and 42B), each of which has two U-shaped open bores (a, a) on its upper end and two circular bores (b, b) on its lower part, and which are overlapped in opposite directions to each other so that the two open bores (a, a) of the third guide plate (42A) can be communicated with the two circular bores (b, b) of the fourth guide plate (42B), and the two circular bores (b, b) of the third guide plate (42A) can be communicated with the two open bores (a, a) of the fourth guide plate (42B). The U-shaped open bore (a) and the circular bore (b) of each of the third and the fourth guide plates (42A and 42B) in communication with each other are referred to as "the second communicated bores".

The first group of rollers (45) comprises the front upper roller (45A) having the rotary axis (45a) on each of both end surfaces and the rear upper roller (45B) having the rotary axis (45b) on each of both end surfaces, and they are rotatably and slidably provided between the first and the second slide bodies (41 and 42).

Specifically, the front upper roller (45A) has one side of the rotary axis (45a) rotatably fitted in the front circular bore (b) of the second guide plate (41B) and slidably fitted in the front open bore (a) of the first guide plate (41A) and has the other side of the rotary axis (45a) rotatably fitted in the front circular bore (b) of the third guide plate (42A) and slidably fitted in the front open bore (a) of the fourth guide plate (42B).

The rear upper roller (45B) has one side of the rotary axis (45b) rotatably fitted in the rear circular bore (b) of the second guide plate (41B) and slidably fitted in the rear open bore (a) of the first guide plate (41A) and has the other side of the rotary axis (45b) rotatably fitted in the rear circular bore (b) of the third guide plate (42A) and slidably fitted in the rear open bore (a) of the fourth guide plate (42B).

The second group of rollers (46) comprises the front lower roller (46A) having the rotary axis (46a) on each of both end surfaces and the rear lower roller (46B) having the rotary axis (46b) on each of both end surfaces, and they are rotatably and slidably provided between the first and the second slide bodies (41 and 42).

Specifically, the front lower roller (46A) has one side of the rotary axis (46a) rotatably fitted in the front circular bore (b) of the first guide plate (41A) and slidably fitted in the front open bore (a) of the second guide plate (41B) and has the other side of the rotary axis (46a) rotatably fitted in the front circular bore (b) of the fourth guide plate (42B) and slidably fitted in the front open bore (a) of the third guide plate (42A).

The rear lower roller (46B) has one side of the rotary axis (46b) rotatably fitted in the rear circular bore (b) of the first guide plate (41A) and slidably fitted in the rear open bore (a) of the second guide plate (41B) and has the other side of the rotary axis (46b) rotatably fitted in the rear circular bore (b) of the fourth guide plate (42B) and slidably fitted in the rear open bore (a) of the third guide plate (42A).

All the rollers (45A, 45B, 46A and 46B) have the same diameter.

A pair of the connecting means (50) are provided on both sides of the hole (21) of the holding member (20) to connect the holding member (20) with the second moving member (30), so that the second moving member (30) can approach the holding member (20) or withdraw therefrom. Each of the connecting means (50) comprises the through hole (51) having the jaw (51a) along its internal periphery; the bolt (52) inserted into the through hole (51); spring members (53) provided between the jaw (51a) of the through hole (51) and the head (52a) of the bolt (52); and the recess (54) provided in one end surface of the second moving member (30) and threaded along its internal periphery to be engaged with an end of the bolt (52).

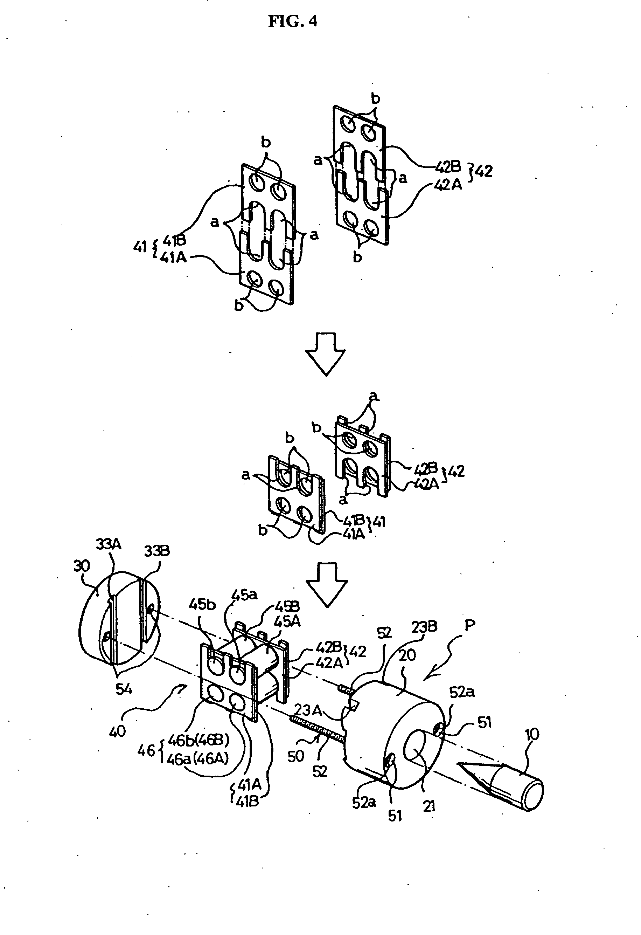

Referring to Fig. 4, procedures of assembling the unit for increasing clamping force will be described.

First of all, the first guide plate (41A) and the second guide plate (41B) are overlapped in opposite directions to each other to form the first slide body (41), and the third guide plate (42A) and the fourth guide plate (42B) are overlapped in opposite directions to each other to form the second slide body (42).

Then, the first group of rollers (45) and the second group of rollers (46) are axially disposed between the first slide body (41) and the second slide body (42). Specifically, each of the rotary axes (45a, 45b, 46a, 46b) on one end surface of each of the rollers (45A, 45B, 46A, 46B) is respectively fitted into the four first communicated bores formed in the first slide body (41), and simultaneously each of the rotary axes (45a, 45b, 46a, 46b) on the other end surface of each of the rollers (45A, 45B, 46A, 46B) is respectively fitted into the four second communicated bores formed in the second slide body (42), so that the unit for increasing clamping force (40) is assembled as in Fig. 4.

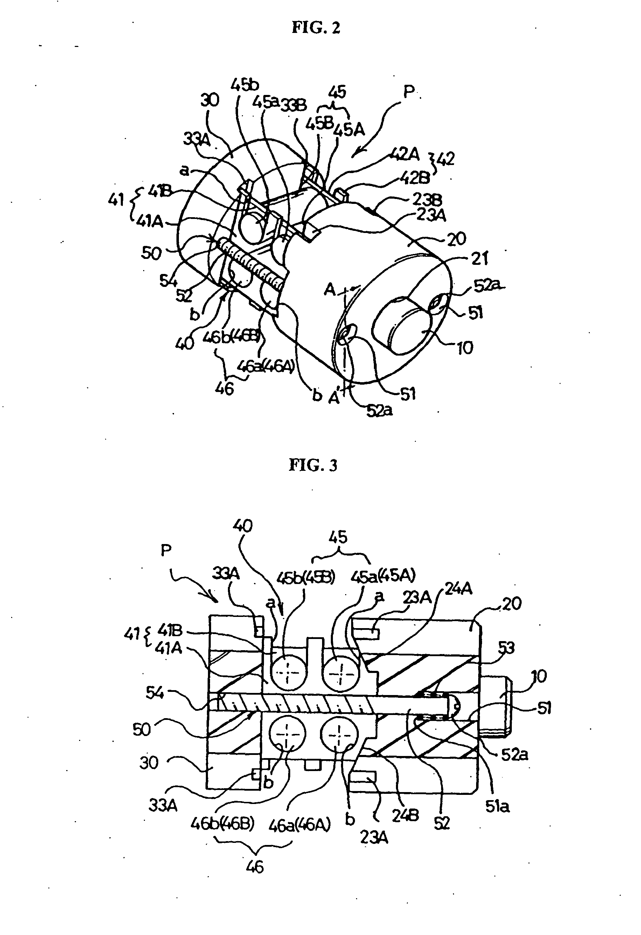

In order to dispose the unit for increasing clamping force (40) between the holding member (20) and the second moving member (30), the first slide body (41) is slidably fitted in the first guide groove (23A) of the holding member (20) and the third guide groove (33A) of the second moving member (30), and simultaneously the second slide body (42) is slidably fitted in the second guide groove (23B) of the holding member (20) and the fourth guide groove (33B) of the second moving member (30). At this time, the bolts (52) fitted in the through holes (51) with the spring members (53) inserted therein are coupled with the recess (54) in a screwed type, as shown in Figs. 2 and 3.

Then, as shown in Fig. 3, the second moving member (30) moves toward the holding member (20) by the elasticity of the spring members (53).

Accordingly, the front upper roller (45A) of the first group of rollers (45) rollably moves along the first inclined plane (24A), and sequentially the second and the third guide plates (41B and 42A) fitted to both the rotary axes (45a, 45a) of the front upper roller (45A) slidably move along the first and the third guide grooves (23A and 33A) and along the second and the fourth guide grooves (23B and 33B), by which the rear upper roller (45B) fitted to second and the third guide plates (41B and 42A) reliably moves in the same direction.

Simultaneously, the front lower roller (46A) of the second group of rollers (46) rollably moves along the second inclined plane (24B), and sequentially the first and the fourth guide plates (41A and 42B) fitted to both the rotary axes (46a, 46a) of the front lower roller (46A) slidably move along the first and the third guide grooves (23A and 33A) and along the second and the fourth guide grooves (23B and 33B), by which the rear lower roller (46B) fitted to first and the fourth guide plates (41A and 42B) rollably moves in the same direction.

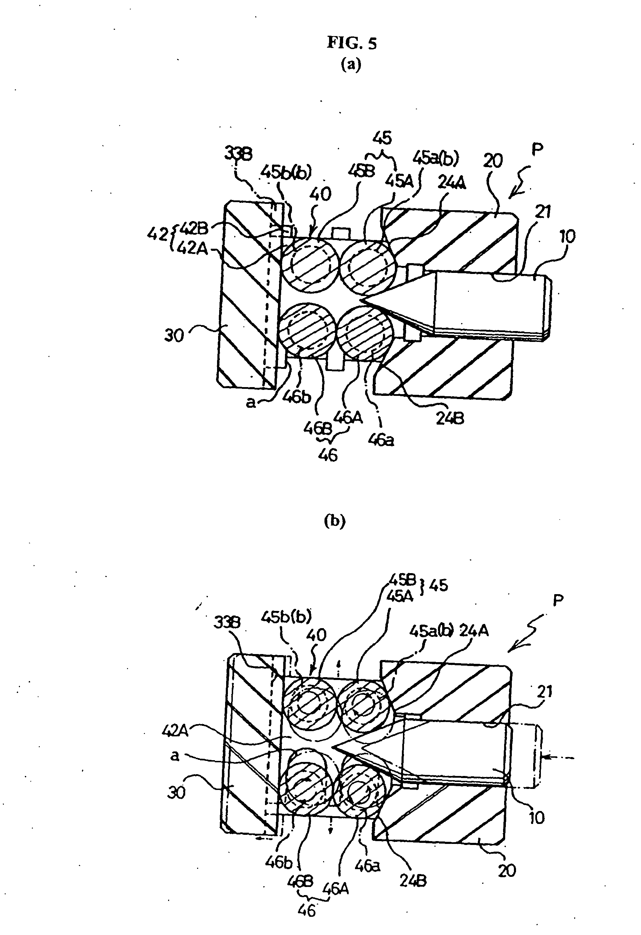

Referring to Figs. 3 and 5a, the rolling movement of the front and rear upper rollers (45A and 45B) and the front and rear lower rollers (46A and 46B) in the approaching direction to each other, and the sequential sliding movement of the first guide plate (41A) and the second guide plate (41B) in a crossed direction and of the third guide plate (42A) and the fourth guide plate (42B) in a crossed direction are carried out until both the rotary axes (45a, 45b, 46a or 46b) of each of the rollers (45A, 45B, 46A, 46B) are in contact with the internal periphery of the open bores (a, a, a, a) of each of the corresponding guide plates (41A, 41B, 42A, 42B).

Finally, by fitting the first moving member (10) into the hole (21) of the holding member (20) so that the cone-shaped leading end of the first moving member (10) can be fitted between the front upper roller (45A) and the front lower roller (46A), the assembly of the unit for increasing clamping force (P) is completed.

The unit for increasing clamping force (P) assembled as above is mounted in the vice (B) by being fitted into the elongated end (5a) of the screw axis (5).

The operation of the unit for increasing clamping force (P) according to the first embodiment will be described hereinafter.

An object to be processed is placed on the base frame (1) of the vice (B). By rotating the handle (8), the screw axis (5) is rotated and the movable jaw (3) advances forward to the fixed jaw (2) on the slider (4), whereby the object is temporarily held between the movable jaw (3) and the fixed jaw (2).

If the handle (8) is further rotated, the central axis (130) of the unit for adjusting clamping force (C) is rotated and advanced forward, thereby pressing the first moving member (10) of the unit for increasing clamping force (P) to move forward.

Then, as shown in Fig. 5b, by the insertion of the cone-shaped leading end of the first moving member (10) between the front upper roller (45A) and the front lower roller (46A), the rollers (45A and 46A) are pushed away.

Therefore, the front upper roller (45A) reliably moves to the outside along the inclined plane (24A) of the holding member (20), and sequentially the second and the third guide plates (41B and 42A) fitted to both the rotary axes (45a, 45a) of the front upper roller (45A) slidably move along the first and the third guide grooves (23A and 33A) and along the second and the fourth guide grooves (23B and 33B), by which the rear upper roller (45B) fitted to second and the third guide plates (41B and 42A) rollably moves in the same direction.

Simultaneously, the front lower roller (46A) rollably moves to the outside along the second inclined plane (24B), and sequentially the first and the fourth guide plates (41A and 42B) fitted to both the rotary axes (46a, 46a) of the front lower roller (46A) slidably move along the first and the third guide grooves (23A and 33A) and along the second and the fourth guide grooves (23B and 33B), by which the rear lower roller (46B) fitted to first and the fourth guide plates (41A and 42B) rollably moves in the same direction.

As described above, as the second moving member (30) moves away from the holding member (20), the distance between the second moving member (30) and the holding member (20) increases, and thus the overall length of the unit for increasing clamping force (P) becomes long. Therefore, the clamping force of the movable jaw (3) against the fixed jaw (2) can be increased as much as the increased length of the unit for increasing clamping force (P), and thus the object temporarily held between the fixed jaw (2) and the movable jaw (3) can be held more strongly.

Further, as each of the rollers (45A, 45B, 46A and 46B) rollably moves through the first and the second slide bodies (41 and 42) which hold the rollers (45A, 45B, 46A and 46B), there is little frictional loss. Therefore, the operational force of the first moving member (10) can be sufficiently transferred to the second moving member (30) by the rolling movement of the rollers (45A, 45B, 46A and 46B), and as a result the clamping force of the movable jaw (3) against the fixed jaw (2) can be efficiently increased.

After the object is processed, the handle (8) backlashes so that the movable jaw (3) moves backward. Then, the force of elastic restitution of the spring members (53) moves the second moving member (30) toward the holding member (20) and simultaneously the rolling movement of the front and rear upper rollers (45A and 45B) and the front and rear lower rollers (46A and 46B) in the approaching direction to each other moves the first moving member (10) backward. Thus, the unit (P) returns to its original state as shown in Fig. 5a.

Alternatively, it can be designed that the holding member (20) can approach the second moving member (30) and withdraw therefrom.

### [Second Embodiment]

Referring to Fig. 6, the unit for increasing clamping force (P) according to the second embodiment has the same constitution as that of the first embodiment, with the exception that the inclined planes (34A and 34B) are formed in the second moving member (30), not in the holding member (20). Thus, the same reference numerals will be used for the same parts and members as those in the first embodiment, and the same description will be omitted herein.

As shown in Fig. 6, the holding member (20) is formed in the shape of a substantially cylinder and provided with the hole (21) in the center thereof, through which the first moving member (10) moves back and forth. The first and the second guide grooves (23A and 23B) are provided symmetrically centering around a diameter of a sectional surface of the holding member (20) and are formed in parallel on one end surface of the holding member (20).

The second moving member (30) is substantially in the form of a cylinder, and has the third and the fourth guide grooves (33A and 33B formed in parallel on one end surface thereof to be in opposition to the first and second guide grooves (23A and 23B). Between the third and the fourth guide grooves (33A and 33B), the third and the fourth inwardly inclined planes (34A and 34B) are formed along both the radius of the diameter.

The operation of the unit for increasing clamping force (P) constituted as above is the same as in the first embodiment.

### [Third Embodiment]

Referring to Fig. 7, the unit for increasing clamping force (P) according to the third embodiment has the same constitution as that of the first or second embodiment, with the exception that the inclined planes (24A and 24B) are formed in the holding member (20) and the inclined planes (34A and 34B) are also formed in the second moving member (30). Thus, the same reference numerals will be used for the same parts and members as those in the first embodiment, and the same description will be omitted herein.

As shown in Fig. 7, the holding member (20) is formed in the shape of a substantially cylinder and provided with the hole (21) in the center thereof, through which the first moving member (10) moves back and forth. The first and the second guide grooves (23A and 23B) are provided symmetrically centering around a diameter of a sectional surface of the holding member (20) and are formed in parallel on one end surface of the holding member (20). Between the first and second guide grooves (23A and 23B), the first and the second inwardly inclined planes (24A and 24B) are formed along the diameter toward the hole (21).

Further, the second moving member (30) is substantially in the form of a cylinder, and has the third and the fourth guide grooves (33A and 33B) formed in parallel on one end surface thereof to be in opposite to the first and second guide grooves (23A and 23B). Between the third and the fourth guide grooves (33A and 33B), the third and the fourth inwardly inclined planes (34A and 34B) are formed in opposite to the first and second inwardly inclined planes (24A and 24B).

The unit for increasing clamping force (P) constituted as above has the same acting effect as in the first and the second embodiments, and additionally it can make the rolling movement very smoothly, since the front and rear upper rollers (45A and 45B) and the front and rear lower rollers (46A and 46B) move in a symmetrical way when they rollably move to the outside.

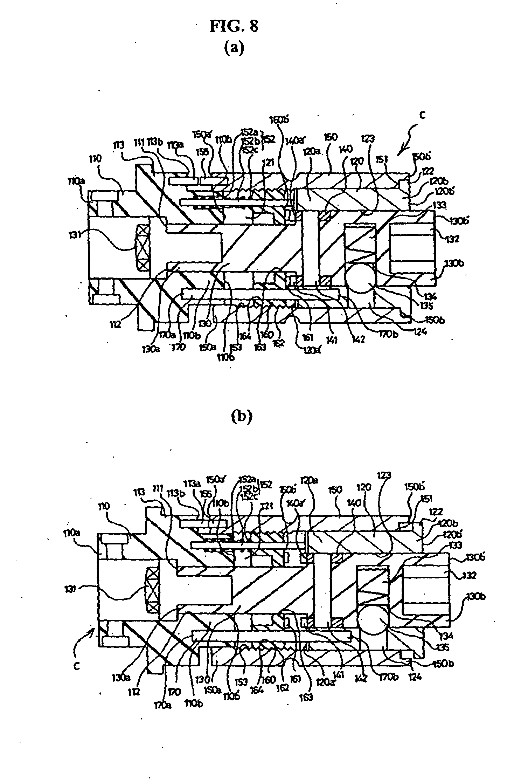

Referring to Figs. 8 to 11, embodiments of the unit for adjusting clamping force (C) for a vice will be described.

The unit for adjusting clamping force (C) generally comprises the coupling part (110), the interval maintaining part (120), the central axis (130), the first clutch (140), the adjusting knob (150), the second clutch (160) and the guide axis (170).

The coupling part (110) has one end (110a) fitted into the elongated end (5a) of the screw axis (5) and also has the axial opening (112) with a jaw (111) along its internal periphery. One end (130a) of the central axis (130) is slidably and rotatably fitted in the axial opening (112), and the pressing part (131) which hangs on the jaw (111) is inserted into the one end (130a) of the central axis (130).

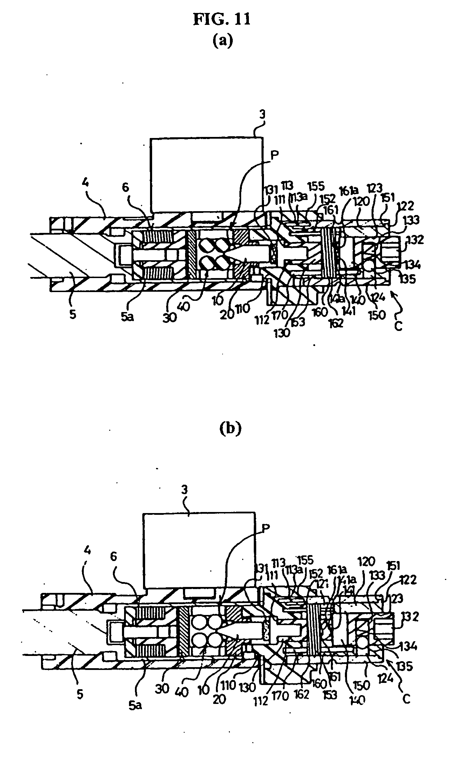

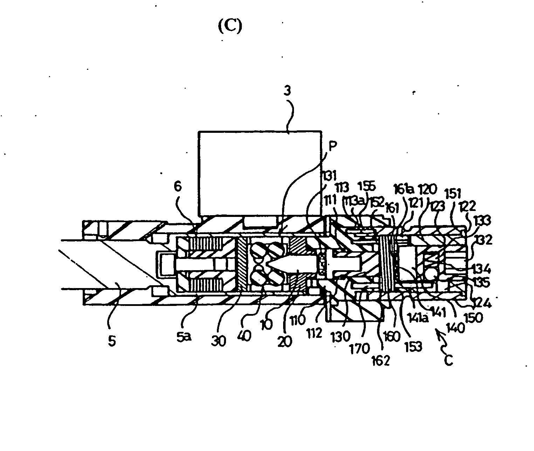

As shown in Figs. 1 and 11, the first moving member (10) of the unit for increasing clamping force (P) is inserted into the axial opening (112) formed at one end (110a) of the coupling part (110), and it is positioned to be in contact with the pressing part (131).

To the other lower end (110b) of the coupling part (110), one end (170a) of the guide axis (170) is fitted, and the other end (170b) is fitted into a groove formed in one end (120a) of the interval maintaining part (120), passing through the axial opening (163) of the second clutch (160). Thus, the space part (121) is formed between the coupling part (110) and the interval maintaining part (120).

The interval maintaining part (120) has the axial opening (123) through which the other end (130b) of the central axis (130) is rotatably and slidably inserted, and the other end (130b) of the central axis (130) is provided with a groove for receiving the handle (132) in the shape of hexagon.

The central axis is rotatably and slidably fitted into the axial opening (112) of the coupling part (110), the axial opening (163) of the second clutch (160) and the axial opening (123) of the interval maintaining part (120), so that it can move back and forth by the rotation of the handle (8).

That is, if the handle (8) is rotated after the hexagonal protrusion of the handle (8) is inserted in the groove (132), the central axis (130) rotates and moves back and forth, which pressurizes or releases the first moving member (10) of the unit for increasing clamping force (P) through the pressing part (131).

The other end (130b) of the central axis (130) is provided with the groove (133) and the ball (135) is inserted in the groove (133) to be elastically supported by the ball spring (134). Also, the interval maintaining part (120) is provided with the control groove (124) in one side so that the ball (135) can be suspended on or released from the entrance thereof.

As the ball (135) is normally suspended on the control groove (124), if the ball (135) resiliently resisting against the ball spring (134) is pushed into the groove (133) of the central axis (130) by the rotational force of the handle (8), the central axis (130) rotates and moves back and forth.

One end (120a) of the interval maintaining part (120) is connected to the coupling part (110) via the space part (121) and the other end (120b) has a plurality of protrusions (122) at the same interval along its external periphery.

The other end (150b) of the adjusting knob (150) is externally fitted to the interval maintaining part (120) to be slidable and rollable, and includes a plurality of concaved parts (151) formed along its internal periphery at the same interval to be engaged with the protrusions (122) of the interval maintaining part (120) by the elastic support means (152).

Further, one end (150a) of the adjusting knob (150) is externally fitted to the other end (110b) of the coupling part (110) to be slidable and rollable.

The adjusting knob (150) also includes the female screw (153) in its internal surface facing the space part (121) between the coupling part (110) and the interval maintaining part (120).

The adjusting knob (150) is elastically supported against the interval maintaining part (120) by the elastic support means (152) so that the protrusions (122) can always be engaged with the concaved parts (151).

The second clutch (160) is connected with the adjusting knob (150) in a screwed type and it has the male screw (162) engaged with the female screw (153) of the adjusting knob (150) along its external periphery and also has the second stopper (161) engaged with the first stopper (141) of the first clutch (140) on the other end surface (160b') thereof.

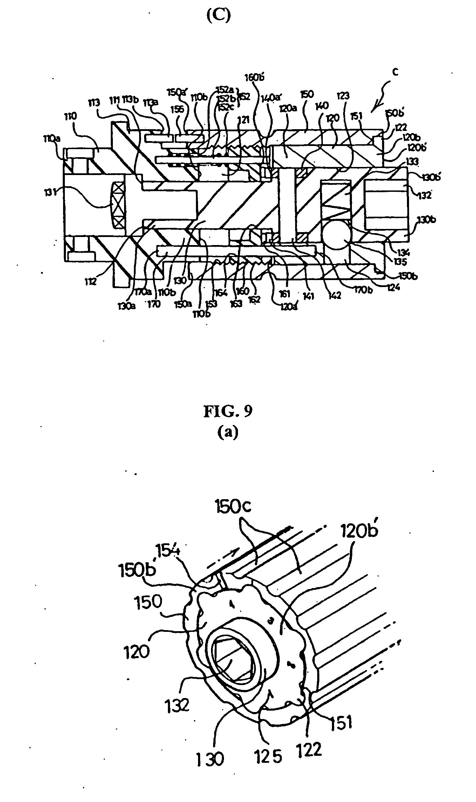

As shown in Fig. 9, it is preferable that a plurality of grooves (150c) are formed along the external periphery of the adjusting knob (150) for an operator's easy manipulation.

The first clutch (140) is externally fitted to a pin (142) and is fitted into one end (120a) of the interval maintaining part (120) substantially in the middle of the central axis (130), and has a first stopper (141) protruded from one end surface (140a') thereof.

Referring to Figs. 8b and 9b, if the adjusting knob (150) is grasped by the operator and is pushed to release the engagement of the protrusions (122) with the concaved parts (151), it can be rotated.

If the adjusting knob (150) is rotated or backlashes, the second clutch (160) moves back and forth in the space part (121) along the guide axis (170), and thus the interval with the first clutch (140) can be adjusted.

Then, if the adjusting knob (150) is released from the operator, the concaved parts (151) can be engaged with the protrusions (122) by the elastic support means (152), and therefore the adjusted interval between the first clutch (140) and the second clutch (160) can be maintained.

The elastic support means (152) comprises the concaved part (152a) formed in the other end (110b) of the coupling part (110); the spring holding rod (152b) with one end fixed into the bottom of the concaved part (152a) and the other end fixed on the end surface (120a') of the interval maintaining part (120) through the second clutch (160); and the springs (152c) provided in the concaved part (152a) and on both sides of the holding rod (152b) in the space part (121).

That is, as the second clutch (160) is screwed with the inside of the adjusting knob (15), the adjusting knob (150) can always be elastically supported by the second clutch (160) which is elastically supported by the elastic support means (152).

It is preferably that a plurality of elastic support means (152) are provided in the present invention to prevent the deterioration of the elasticity due to its use for a long time.

Like the guide axis (170), the holding rod (152b) also serves to guide the back and forth movement of the second clutch (160).

Along the external periphery of the coupling part (110), the protruding part (113) is formed to prevent the adjusting knob (150) from being excessively moved when the adjusting knob (150) is pushed by the operator to release the engagement of the protrusions (122) with the concaved parts (151).

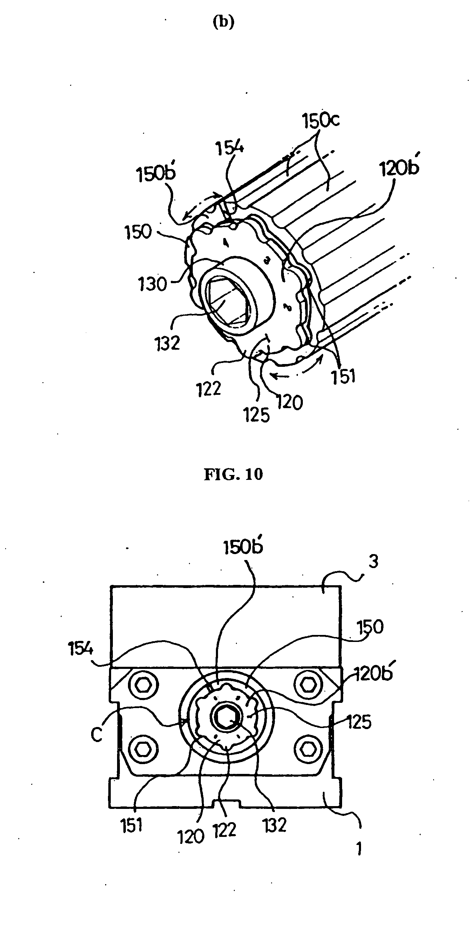

As shown in Figs. 9 and 10, on the other end surface (120b') of the interval maintaining part (120), the letters (125) indicating the distance between the first and the second clutches (140 and 160) are engraved and the grooves (154) indicating the engraved letters (125) are formed on the other end surface (150b') of the adjusting knob (150).

In rotating the adjusting knob (150), the protrusions (122) are brought to be engaged with the concaved parts (151) according to the letters (125) and the grooves (154), and accordingly the distance between the first and the second clutches (140 and 160) can be adjusted as desired.

Further, the upwardly inclined surface (141a) is formed on the end surface of the first stopper (141) of the first clutch (140) in a clockwise direction, and the downwardly inclined surface (161 a) is formed on the end surface of the second stopper (161) of the second clutch (160) to be in contact with the upwardly inclined surface (141a).

If the first clutch (140) comes in contact with the second clutch (160) by the rotation and forward movement of the central axis (130), the upwardly inclined surface (141a) comes in a sliding contact with the downwardly inclined surface (161a), and the first stopper (141) is smoothly engaged with the second stopper (161), which causes the central axis (130) not to rotate further and to stop forwarding.

Further, the bar (155) is protruded from one end (150a) of the adjusting knob (150) to prevent the excessive rotation of the adjusting knob (150). Also, the finger bar (113a) is protruded from the other end (113b) of the protruding part (113) so that the bar (155) can hang thereon.

That is, when it is desired to adjust the distance between the first and the second clutches (140 and 160) by the rotation of the adjusting knob (150), since the adjusting knob (150) rotates step by step within a given range by the bar (155)'s hanging on the finger bar (113a), even if the indicating letters (125) are erased due to the long time use, the operator can easily manipulate the rotation of the adjusting knob (150).

Then, the operation of the unit for adjusting clamping force (C) will be described hereinafter.

When the indicating grooves (154) of the adjusting knob (150) indicates "0" among the indicating letters (125) of the interval maintaining part (120), as shown in Fig. 11a, it means that the first clutch (140) is in contact with the second clutch (160), that is, the second stopper (161) is engaged with the first stopper (141).

At this time, if the protrusions (122) of the interval maintaining part (120) are brought to be engaged with the concaved parts (151) by rotating the adjusting knob (150), so that the groove (154) may indicate one of the indicating letters (125) "1" to "4", the second clutch (160) moves forward along the guide axis (170) as shown in Fig. 11b, and thus the first clutch (140) and the second clutch (160) become more distant. The distance between the first clutch (140) and the second clutch (160) increases step by step depending on how the adjusting knob (150) is rotated.

When the distance between the first clutch (140) and the second clutch (160) is adjusted, an object to be processed is placed on the base frame (1) of the vice (B). Then, by rotating the handle (8), the screw axis (5) is rotated and the movable jaw (3) advances forward to the fixed jaw (2) on the slider (4), and thus the object is temporarily held between the movable jaw (3) and the fixed jaw (2).

At this temporary holding state, if the handle (8) is further rotated, the ball (135) which has been suspending in the control groove (124) is pushed in the groove (133), elastically resisting against the ball spring (134) as shown in Fig. 11c, and thus the central axis (130) is rotated and advanced forward until the first clutch (140) comes in contact with the second clutch (160).

Accordingly, the first moving member (10) of the unit for increasing clamping force (P) which is in contact with the pressing part (131) moves forward as far as the distance that the central axis (130) moves forward, and by increasing the clamping force of the vice (B) as described above by the operation of the unit for increasing clamping force (P), the object which has temporarily been held between the fixed jaw (2) and the movable jaw (3) is held more strongly.

The increase of the clamping force by the unit for increasing clamping force (P) is proportional to the distance between the first and the second clutches (140 and 160). Therefore, it is possible to easily adjust the clamping force directed to the fixed jaw (2) from the movable jaw (3), by rotating the adjusting knob (150) appropriately depending on the object held between the fixed jaw (2) and the movable jaw (3).

Therefore, it can be prevented that the object held between the fixed jaw (2) and the movable jaw (3) is deformed or damaged due to an excessive clamping force. Also, the object can be held more strongly and efficiently between the fixed jaw (2) and the movable jaw (3) by the unit for increasing clamping force (P).

As described above, the unit for increasing clamping force for a vice according to the present invention does not make an object held by the vice to be easily deviated or detached from the vice even if a large external force is applied to the object. Thus, the precision machining can be done on the objects held by the vice having the unit for increasing and adjusting clamping force according to the present invention, and as a result, products with high precision can be obtained.

Also, as each of the rollers of the unit for increasing clamping force rollably moves through the first and the second slide bodies, the operational force of the first moving member can be sufficiently transferred to the second moving member and as a result the clamping force of the movable jaw against the fixed jaw can be efficiently increased.

Further, according to the unit for adjusting clamping force for a vice, the clamping force directed from the movable jaw to the fixed jaw, especially the force increased by the unit for increasing clamping force, can easily be adjusted depending on an object held between the movable jaw to the fixed jaw, and the deformation or damage of the object caused by the excessive clamping force can be prevented.

## Claims

1. A unit for increasing clamping force for a vice comprising:
a first moving member (10) having an inward wedge-shaped end;
a holding member (20) having a hole (21) through which the first moving member (10) moves back and forth and including first and second guide grooves (23A and 23B) provided in parallel on one end surface and symmetrically centring around a diameter of a sectional surface of the holding member (20), and first and second inwardly inclined planes (24A and 24B) provided between the first and second guide grooves (23A and 23B) toward the hole (21) along the diameter;
a second moving member (30)
a unit for increasing force (40) provided between the holding member (20) and the second moving member (30),
**characterized in**
the second moving member having third and fourth guide grooves (33A and 33B) provided in parallel on one end surface to be opposite to the first and second guide grooves (23A and 23B);
the unit for increasing force comprising a first slide body (41) slidably fitted in the first (23A) and third (33A) guide grooves, a second slide body (42) slidably fitted in the second (23B) and fourth guide grooves (33B), and rollers (45, 46) rotatably and slidably provided between the first and second slide bodies and
a pair of connecting means (50) to connect the holding member (20) with the second moving member (30) so that the second moving member (30) can approach the holding member (20) or withdraw therefrom.

2. A unit as claimed in claim 1, in which the second moving member (30) further includes third and fourth inwardly inclined planes (34A and 34B) provided between the third and fourth guide grooves (33A and 33B).

3. A unit for increasing clamping force for a vice comprising:
a first moving member (10) having an inward wedge-shaped end;
a holding member (20) having a hole (21) through which the first moving member (10) moves back and forth and including first and second guide grooves (23A and 23B) provided in parallel on one end surface and symmetrically centring around a diameter of a sectional surface of the holding member (20);
a second moving member (30)
a unit for increasing force (40) provided between the holding member (20) and the second moving member (30),
**characterized in**
the second moving member having third and fourth guide grooves (33A and 33B) provided in parallel on one end surface to be in opposite to the first and second guide grooves (23A and 23B)) and havin third and fourth inwardly inclined planes (34A and 34B) provided between the third and fourth guide grooves (33A and 33B);
the unit for increasing force comprising a first slide body (41) slidably fitted in the first (23A) and third (33A) guide grooves, a second slide body (42) slidably fitted in the second (23B) and fourth guide grooves (33B), and rollers (45, 46) rotatably and slidably provided between the first and second slide bodies and
a pair of connecting means (50) to connect the holding member (20) with the second moving member (30) so that the second moving member (30) can approach the holding member (20) or withdraw therefrom.

4. A unit for increasing clamping force as claimed in any of claim 1 to claim 3, wherein
the first slide body (41) comprises first and second guide plates (41A and 41 B) substantially in the shape of square, each of which has two U -shaped open bores (a, a) on its upper end and two circular bores (b, b) on its lower part, and which are overlapped in opposite directions and slide in opposite directions to each other in the first guide groove (23A) of the holding member (20) and the third guide groove (33A) of the second moving member (30);
the second slide body (42) comprises third and fourth guide plates (42A and 42B) substantially in the shape of square, each of which has two U-shaped open bores (a, a) on its upper end and two circular bores (b, b) on its lower part, and which are overlapped in opposite directions and slide in opposite directions to each other in the second guide groove (23B) of the holding member (20) and the fourth guide groove (33B) of the second moving member (30);
the first group of rollers (45) comprises a front upper roller (45A) and a rear upper roller (45B), each of which is provided between the first and second slide bodies (41 and 42) through their respective bores (a and b) to be rotatable and slidable and has a rotary axis (45a or 45b) on both ends thereof; and
the second group of rollers (46) comprises a front lower roller (46A) and a rear lower roller (46B), each of which is provided between the first and second slide bodies (41 and 42) through their respective bores (a and b) to be rotatable and slidable and has a rotary axis (46a or 46b) on both ends thereof.

5. A unit for increasing clamping force as claimed in claim 4, wherein all the rollers (45A, 45B, 46A and 46B) have the same diameter.

6. A unit for increasing clamping force as claimed in any of claim 1 to claim 3, wherein the connecting means (50) comprises:
a through hole (51) provided on either side of the hole (21) of the holding member (20) and having a jaw (51a) along its internal periphery; a bolt (52) inserted into the through hole (51); spring members (53) provided between the jaw (51 a) of the through hole (51) and a head (52a) of the bolt (52); and a recess (54) provided in one end surface of the second moving member (30) and threaded along its internal periphery to be engaged with an end of the bolt (52).

## Patentansprüche

1. Vorrichtung zum Verstärken der Klemmkraft für einen Schraubstock, welche aufweist:
ein erstes bewegliches Element (10), welches ein einwärts gerichtetes, Keilförmiges Ende aufweist;
ein Halteelement (20), welches ein Loch (21) aufweist, durch das sich das erste bewegliche Element (10) vor- und zurückbewegt und welches Halteelement erste und zweite Führungsnuten (23A und 23B) beinhaltet, welche parallel an einer Endoberfläche und symmetrisch um einen Durchmesser einer Schnittoberfläche des Halteelements (20) zentriert vorgesehen sind, und erste und zweite nach Innen hin geneigte Flächen (24A und 24B), welche zwischen den ersten und zweiten Führungsnuten (23A und 23B) entlang dem Durchmesser dem Loch (21) zugewandt vorgesehen sind;
ein zweites bewegliches Element (30);
ein Kraftverstärkungselement (40), welches zwischen dem Halteelement (20) und dem zweiten beweglichen Element (30) vorgesehen ist; **gekennzeichnet durch**
das zweite bewegliche Element, welches dritte und vierte Führungsnuten (33A und 33B) aufweist, welche parallel auf einer Endoberfläche gegenüber den ersten und zweiten Führungsnuten (23A und 23B) vorgesehen sind; das Kraftverstärkungselement, welches einen in den ersten (23A) und dritten (33A) Führungsnuten verschiebbar eingepassten ersten Gleitkörper (41), einen in den zweiten (23B) und vierten (33B) Führungsnuten verschiebbar eingepassten zweiten Gleitkörpern (42), und drehbar und verschiebbar zwischen den ersten und zweiten Gleitkörpern vorgesehene Rollen (45, 46) aufweist, und ein Paar Verbindungsmittel (50), um das Halteelement (20) mit dem zweiten beweglichen Element (30) zu verbinden, so dass das zweite bewegliche Element (30) sich dem Halteelement (20) nähern, oder sich davon zurückziehen kann.

2. Vorrichtung nach Anspruch 1, wobei das zweite bewegliche Element (30) weiters dritte und vierte nach Innen hin geneigte Flächen (34A und 34B) beinhaltet, welche zwischen den dritten und vierten Führungsnuten (33A und 33B) vorgesehen sind.

3. Vorrichtung zum Verstärken der Klemmkraft für einen Schraubstock, welche aufweist:
ein erstes bewegliches Element (10), welches ein einwärts gerichtetes, Keilförmiges Ende aufweist;
ein Halteelement (20), welches ein Loch (21) aufweist, durch welches sich das erste bewegliche Element (10) vor- und zurückbewegt und welches Halteelement erste und zweite Führungsnuten (23A und 23B) beinhaltet, welche parallel an einer Endoberfläche und symmetrisch um einen Durchmesser einer Schnittoberfläche des Halteelements (20) zentriert vorgesehen sind;
ein zweites bewegliches Element (30);
ein Kraftverstärkungselement (40), welches zwischen dem Halteelement (20) und dem zweiten beweglichen Element (30) vorgesehen ist; **gekennzeichnet durch**
das zweite bewegliche Element, welches dritte und vierte Führungsnuten (33A und 33B) aufweist, welche parallel auf einer Endoberfläche gegenüber den ersten und zweiten Führungsnuten (23A und 23B) vorgesehen sind und welches dritte und vierte nach Innen hin geneigte Flächen (34A und 34B), welche zwischen den dritten und vierten Führungsnuten (33A und 33B) vorgesehen sind, aufweist; das Kraftverstärkungselement, welches einen in den ersten (23A) und dritten (33A) Führungsnuten verschiebbar eingepassten ersten Gleitkörper (41), einen in den zweiten (23B) und vierten (33B) Führungsnuten verschiebbar eingepassten zweiten Gleitkörpern (42), und drehbar und verschiebbar zwischen den ersten und zweiten Gleitkörpern vorgesehene Rollen (45, 46) aufweist, und ein Paar Verbindungsmittel (50), um das Halteelement (20) mit dem zweiten beweglichen Element (30) zu verbinden, so dass das zweite bewegliche Element (30) sich dem Halteelement (20) nähern, oder sich davon zurückziehen kann.

4. Vorrichtung zum Verstärken der Klemmkraft nach einem der Ansprüche 1 bis 3, wobei
der erste Gleitkörper (41) erste und zweite im wesentlichen viereckige Führungsplatten (41A und 41B) aufweist, von welchen jede zwei U-förmige offene Ausnehmungen (a, a) an deren oberen Ende und zwei kreisförmige Ausnehmungen (b, b) an deren unterm Teil aufweisen und welche in Gegenrichtung überlappen und in Gegenrichtung zueinander in der ersten Führungsnut (23A) des Halteelements (20) und der dritten Führungsnut (33A) des zweiten beweglichen Elements (30) gleiten;
der zweite Gleitkörper (42) dritte und vierte im Wesentlichen viereckige Führungsplatten (42A und 42B) aufweist, von welchen jede zwei U-förmige offene Ausnehmungen (a, a) an deren oberen Ende und zwei kreisförmige Ausnehmungen (b, b) an deren unterm Teil aufweisen und welche in Gegenrichtung überlappen und in Gegenrichtung zueinander in der zweiten Führungsnut (23B) des Halteelements (20) und der vierten Führungsnut (33B) des zweiten beweglichen Elements (30) gleiten;
die erste Gruppe von Rollen (45) eine vordere obere Rolle (45A) und eine hintere obere Rolle (45B) aufweist, von denen jede zwischen den ersten und zweiten Gleitkörpern (41 und 42) durch deren entsprechende Ausnehmungen (a und b) so vorgesehen ist, dass die Rollen drehbar und verschiebbar sind, und die Rollen an deren beiden Enden eine Drehachse (45a oder 45b) aufweisen; und
die zweite Gruppe von Rollen (46) eine vordere untere Rolle (46A) und eine hintere untere Rolle (46B) aufweist, von denen jede zwischen den ersten und zweiten Gleitkörpern (41 und 42) durch deren entsprechende Ausnehmungen (a und b) so vorgesehen ist, dass die Rollen drehbar und verschiebbar sind, und die Rollen an deren beiden Enden eine Drehachse (46a oder 46b) aufweisen.

5. Vorrichtung zum Verstärken der Klemmkraft nach Anspruch 4, wobei alle Rollen (45A, 45B, 46A und 46B) den gleichen Durchmesser aufweisen.

6. Vorrichtung zum Verstärken der Klemmkraft nach einem der Ansprüche 1 bis 3, wobei das Verbindungsmittel (50) aufweist:
eine Durchgangsbohrung (51), welche an jeder Seite des Loches (21) des Halteelementes (20) vorgesehen ist, und welche einen Anschlag (51a) an ihrem inneren Umfang aufweist; einen Bolzen (52), welcher in die Durchgangsbohrung (51) eingesetzt ist; Federelemente (53) welche zwischen dem Anschlag (51a) der Durchgangsbohrung (51) und einem Kopf (52a) des Bolzens (52) vorgesehen sind; und eine Ausnehmung (54) welche in einer Endoberfläche des zweiten beweglichen Elements (30) vorgesehen ist und an ihrem inneren Umfang mit einem Gewinde versehen ist, um mit einem Ende des Bolzens (52) im Eingriff zu sein.

## Revendications

1. Unité d'augmentation de la force de serrage pour un étau, comprenant :
un premier élément mobile (10) présentant une extrémité cunéiforme vers l'intérieur;
un élément de maintien (20) comportant un trou (21) à travers lequel le premier élément mobile (10) recule et avance et comprenant des première et deuxième rainures de guidage (23A et 23B) prévues en parallèle sur une surface d'extrémité et assurant un centrage symétrique autour d'un diamètre d'une superficie de section de l'élément de maintien (20), et des premier et deuxième plans inclinés vers l'intérieur (24A et 24B) prévus entre les première et deuxième rainures de guidage (23A et 23B) en direction du trou (21) le long du diamètre;
un deuxième élément mobile (30);
une unité d'augmentation de la force (40) prévue entre l'élément de maintien (20) et le deuxième élément mobile (30);
**caractérisée en ce que**
le deuxième élément mobile comporte des troisième et quatrième rainures de guidage (33A et 33B) prévues en parallèle sur une surface d'extrémité pour être opposées aux première et deuxième rainures de guidage (23A et 23B);
l'unité d'augmentation de la force comprend un premier corps coulissant (41) adapté de façon coulissante dans les première (23A) et troisième (33A) rainures de guidage, un deuxième corps coulissant (42) adapté de façon coulissante dans les deuxième (23B) et quatrième (33B) rainures des guidage, et des rouleaux (45, 46) prévus de façon à pouvoir tourner et coulisser entre les premier et deuxième corps coulissants; et
une paire de moyens de raccordement (50) pour raccorder l'élément de maintien (20) au deuxième élément mobile (30) de sorte que le deuxième élément mobile (30) peut s'approcher de l'élément de maintien (20) ou s'éloigner de celui-ci.

2. Unité selon la revendication 1, dans laquelle le deuxième élément mobile (30) comprend en outre des troisième et quatrième plans inclinés vers l'intérieur (34A et 34B) prévus entre les troisième et quatrième rainures de guidage (33A et 33B).

3. Unité d'augmentation de la force de serrage pour un étau, comprenant :
un premier élément mobile (10) présentant une extrémité cunéiforme vers l'intérieur;
un élément de maintien (20) comportant un trou (21) à travers lequel le premier élément mobile (10) recule et avance et comprenant des première et deuxième rainures de guidage (23A et 23B) prévues en parallèle sur une surface d'extrémité et assurant un centrage symétrique autour d'un diamètre d'une superficie de section de l'élément de maintien (20);
un deuxième élément mobile (30);
une unité d'augmentation de la force (40) prévue entre l'élément de maintien (20) et le deuxième élément mobile (30);
**caractérisée en ce que**
le deuxième élément mobile comporte des troisième et quatrième rainures de guidage (33A et 33B) prévues en parallèle sur une surface d'extrémité pour être opposées aux première et deuxième rainures de guidage (23A et 23B) et comporte des troisième et quatrième plans inclinés vers l'intérieur (34A et 34B) prévus entre les troisième et quatrième rainures de guidage (33A et 33B);
l'unité d'augmentation de la force comprend un premier corps coulissant (41) adapté de façon coulissante dans les première (23A) et troisième (33A) rainures de guidage, un deuxième corps coulissant (42) adapté de façon coulissante dans les deuxième (23B) et quatrième (33B) rainures des guidage, et des rouleaux (45, 46) prévus de façon à pouvoir tourner et coulisser entre les premier et deuxième corps coulissants; et
une paire de moyens de raccordement (50) pour raccorder l'élément de maintien (20) au deuxième élément mobile (30) de sorte que le deuxième élément mobile (30) peut s'approcher de l'élément de maintien (20) ou s'éloigner de celui-ci.

4. Unité d'augmentation de la force de serrage selon l'une quelconque des revendications 1 à 3, dans laquelle
le premier corps coulissant (41) comprend des première et deuxième plaques de guidage (41A et 41B) substantiellement sous la forme d'un carré, dont chacune présente deux alésages ouverts en forme de U (a, a) sur son extrémité supérieure et deux alésages circulaires (b, b) sur sa partie inférieure, et qui se recouvrent dans des directions opposées et coulissent dans des directions opposées l'une par rapport à l'autre dans la première rainure de guidage (23A) de l'élément de maintien (20) et la troisième rainure de guidage (33A) du deuxième élément mobile (30);
le deuxième corps coulissant (42) comprend des troisième et quatrième plaques de guidage (42A et 42B) substantiellement sous la forme d'un carré, dont chacune présente deux alésages ouverts en forme de U (a, a) sur son extrémité supérieure et deux alésages circulaires (b, b) sur sa partie inférieure et qui se recouvrent dans des directions opposées et coulissent dans des directions opposées l'une par rapport à l'autre dans la deuxième rainure de guidage (23B) de l'élément de maintien (20) et la quatrième rainure de guidage (33B) du deuxième élément mobile (30);
le premier groupe de rouleaux (45) comprend un rouleau supérieur avant (45A) et un rouleau supérieur arrière (45B), dont chacun est prévu entre les premier et deuxième corps coulissants (41 et 42) à travers leurs alésages respectifs (a et b) afin de pouvoir tourner et coulisser et présente un axe de rotation (45a ou 45b) aux deux extrémités de celui-ci; et
le deuxième groupe de rouleaux (46) comprend un rouleau inférieur avant (46A) et un rouleau inférieur arrière (46B), dont chacun est prévu entre les premier et deuxième corps coulissants (41 et 42) à travers leurs alésages respectifs (a et b) afin de pouvoir tourner et coulisser et présente un axe de rotation (46a ou 46b) aux deux extrémités de celui-ci.

5. Unité d'augmentation de la force de serrage selon la revendication 4, dans laquelle tous les rouleaux (45A, 45B, 46A et 46B) présentent le même diamètre.

6. Unité d'augmentation de la force de serrage selon l'une quelconque des revendications 1 à 3, dans laquelle les moyens de raccordement (50) comprennent :
un trou traversant (51) prévu de chaque côté du trou (21) de l'élément de maintien (20) et présentant une mâchoire (51a) le long de sa périphérie interne; un boulon (52) inséré dans le trou traversant (51); des éléments de ressort (53) prévus entre la mâchoire (51a) du trou traversant (51) et une tête (52a) du boulon (52); et un enfoncement (54) prévu dans une surface d'extrémité du deuxième élément mobile (30) et fileté le long de sa périphérie interne pour une mise en prise avec une extrémité du boulon (52).
